# EUROPEAN PATENT SPECIFICATION

(11) **EP 4 320 312 B1**
(45) Date of publication and mention of the grant of the patent: **14.05.2025**
(21) Application number: 22801580.6
(22) Date of filing: 10.11.2022
(51) Int. Cl.: E02B 17/00, B66C 13/18, B66C 23/18, E02D 13/04, B66C 1/10, B66C 23/52

(54) **A VESSEL AND A METHOD OF INSERTING A MONOPILE INTO A GUIDE**
BEHÄLTER UND VERFAHREN ZUM EINFÜHREN EINES MONOPILE IN EINE FÜHRUNG
NAVIRE ET PROCÉDÉ D'INSERTION DE MONOPIEU DANS UN GUIDE

(30) Priority: 11.11.2021 NL 2029720
(43) Date of publication of application: 14.02.2024
(73) Proprietor: IQIP Holding B.V., 3361 EP Sliedrecht (NL)
(72) Inventor: VAN DER ZEE, Alexander Maarten, 3361 EP Sliedrecht (NL); ZIJLMANS, Jurgen Arjan, 3361 EP Sliedrecht (NL); BAKKER, Fabian Corijn, 3361 EP Sliedrecht (NL); VAN DEN BERG, Bram, 3361 EP Sliedrecht (NL); OSNABRUGGE, Jacob, 3361 EP Sliedrecht (NL)
(74) Representative: De Vries & Metman
(86) International application number: PCT/NL2022/050638
(87) International publication number: WO 2023/085930

(56) References cited:
- WO-A2-2021/148479

## Description

The present invention relates to a vessel, comprising a hull and a guide for guiding a monopile to be driven into a seabed, which guide is movably mounted to the hull and provided with a receiving part and a closure part which is movable with respect to the receiving part for creating a closed condition of the guide in which closed condition the guide forms an annular body extending in a main plane and an open condition in which the guide has an opening to a space which is bordered by the receiving part, allowing a monopile to be received in the space via the opening and a displacing device for displacing the guide within the main plane with respect to the hull and a control system for controlling the displacing device.

A vessel including such a guide, which is also called a wave-induced motion compensated pile gripper, is known in the art. The motion compensation allows the gripper to compensate the disturbing vessel motions. Installing a monopile from a floating vessel has great advantages since it allows higher pay-loads and crane capacities than jack-up barges and requires less time for positioning the vessel such that the total time of installing monopiles is minimized, but it is challenging because of wave-induced vessel motions and monopile motions. When a monopile is hung below a cable of a crane at the vessel and inserted into the mentioned space through the opening in the guide the wave-induced motions may lead to collisions between the monopile and the guide. It is noted that in practice a lower section of the monopile may be located in the water during inserting the monopile into the guide which may also lead to wave-induced motions of the monopile.

WO 2021/148479 relates to an assembly for installing a pile in a seabed, the assembly comprising a vessel comprising a positioning system for keeping the vessel at an installation location relative to the seabed, the positioning system having a positioning stiffness; a pile guiding system configured to guide the pile during installation thereof, the pile guiding system comprising a base provided on the vessel; a first guiding device connected to the base, the first guiding device being configured to accommodate the pile during installation thereof; a resilient member for providing a resilient connection between the vessel and the pile during installation thereof for allowing relative motions between the pile and the vessel, the resilient member having a connection stiffness, wherein the resilient member is configured and intended to keep a natural period of a pivoting movement of the pile about the seabed caused by waves during installation thereof longer than a dominant wave period of a wave spectrum at the installation location by providing the resilient connection with a low connection stiffness.

An object of the invention is to provide a vessel which minimizes the risk of collisions.

This object is accomplished with the vessel according to the invention, wherein the control system is configured such that it determines an oscillating path of a monopile with respect to the hull in a direction within the main plane when the monopile and the guide are moving toward each other and the guide is in the open condition for receiving the monopile and during a first part of approaching the guide the clearance between the receiving part and the monopile along the first component is larger than along the second component. In practice the first component may be perpendicular to the opening in the annular body.

In the closed condition the guide may be substantially circular within the main plane such that the receiving part is partly circular within the main plane. Nevertheless, alternative shapes are conceivable. The receiving part may have numerous partly annular shapes.

The closure part may comprise a pair of doors which are pivotally mounted to the receiving part and open in opposite directions with respect to each other in outward direction of the guide, preferably independently from each other. This provides the opportunity to create a large access to the space that is bordered by the receiving part.

In a practical embodiment the displacing device is provided with linear actuators, such as hydraulic cylinders or a rack and pinion system, which operate along lines of action that extend perpendicularly to each other.

The control system may comprise a position sensor for determining the actual location of a monopile with respect to the guide so as to determine the oscillating path. This also enables the control system to derive the actual velocity of the monopile along the oscillating path. Additionally, motion measurement sensors may be applied, for example at the monopile and/or at lifting tools for hoisting the monopile so as to accurately determine the actual position and velocity of the monopile.

The control system may also comprise an inclination angle sensor for determining an actual inclination angle of the monopile. The actual inclination angle is a useful parameter, which provides in combination with the actual position of the monopile an accurate indication of the actual motion characteristics of the monopile, which facilitates an accurate control of the position of the guide.

The position sensor may be based on radar, laser or lidar technology, but it may also be a vision system or a mechanical system which touches the monopile. Radar and lidar technology are preferred since they are applicable under all weather conditions. In order to determine the actual position of the monopile in an accurate way a plurality of position sensors may be applied.

The position sensor may be located at the guide, preferably at the receiving part in order to achieve an accurate measurement of the position of the monopile relative to the guide. This enables the control system to accurately follow the oscillating path of the monopile within the main plane. It is also conceivable to locate the position sensor at the hull.

The vessel may be provided with a crane for hoisting a monopile and moving the hoisted monopile towards the guide.

The guide and/or the displacing device may be provided with a damping device for mitigating collisions between a monopile and the guide.

In a particular embodiment the damping device comprises damping elements at an inner circumference of the guide, or more specifically, at an inner side of the receiving part.

The guide may be rotatable with respect to the hull about an axis which extends perpendicularly to the main plane. This provides the opportunity to vary the orientation of the opening such that it can be directed to a monopile when the monopile and the opening are approaching each other. It is noted that this configuration is also conceivable without the feature that the control system is configured such that it displaces the guide substantially synchronously with the determined oscillating path. In other words, the invention also relates to a vessel, comprising a hull and a guide for guiding a monopile to be driven into a seabed, which guide is movably mounted to the hull and provided with a receiving part and a closure part which is movable with respect to the receiving part for creating a closed condition of the guide in which closed condition the guide forms an annular body extending in a main plane and an open condition in which the guide has an opening to a space which is bordered by the receiving part, allowing a monopile to be received in the space via the opening, a displacing device for displacing the guide within the main plane with respect to the hull and a control system for controlling the displacing device, wherein the guide is rotatable with respect to the hull about an axis which extends perpendicularly to the main plane. The vessel may be provided with other features as described hereinbefore, for example the guide and/or the displacing device may be provided with a damping device for mitigating collisions between a monopile and the guide.

The invention is also related to a method of inserting a monopile to be driven into a seabed into a guide for guiding the monopile, which guide is movably mounted to a hull of a vessel and provided with a receiving part and a closure part which is movable with respect to the receiving part for creating a closed condition of the guide in which closed condition the guide forms an annular body extending in a main plane and an open condition in which the guide has an opening to a space which is bordered by the receiving part, allowing a monopile to be received in the space via the opening, wherein in the open condition the monopile and the guide are moved to each other, during which movement an oscillating path of the monopile with respect to the hull within the main plane is determined and the guide is displaced substantially synchronously with the determined oscillating path in the same direction thereof.

In a particular embodiment the direction is decomposed in a first component which is towards the guide and away from the guide and a second component which extends transversely to the first component, wherein when the determined oscillating path is located at a first distance from the receiving part the guide is displaced along the first and second components, whereas when the determined oscillating path is located at a second distance from the receiving part which is larger than the first distance the guide is displaced along the second component only.

In practice, after inserting the monopile into the guide the closure part is closed, during which and/or after which the guide is displaced such that a counterforce is applied on the monopile in order to minimize the amplitude of the oscillating path.

It is also possible that after inserting the monopile into the guide the closure part is closed, during which and/or after which a remaining oscillating motion of the guide including the monopile is dampened.

The invention will hereafter be elucidated with reference to the schematic drawings showing an embodiment of the invention by way of example.
Fig. 1 is a perspective view of an embodiment of a vessel according to the invention.
Fig. 2 is an illustrative view of successive activities from hoisting a monopile from the vessel as shown in Fig. 1 to driving the monopile into a seabed.
Fig. 3 is an enlarged top view of a part of the vessel as shown in Fig. 1, showing a guide for guiding a monopile to be driven into the seabed.
Fig. 4 is a similar view as Fig. 3, but illustrating a different situation.
Fig. 5 is a diagram, showing actual positions of the guide and the monopile of Figs. 3 and 4 as a function of time.
Fig. 6 is a similar view as Fig. 3, but showing the guide in a different orientation.

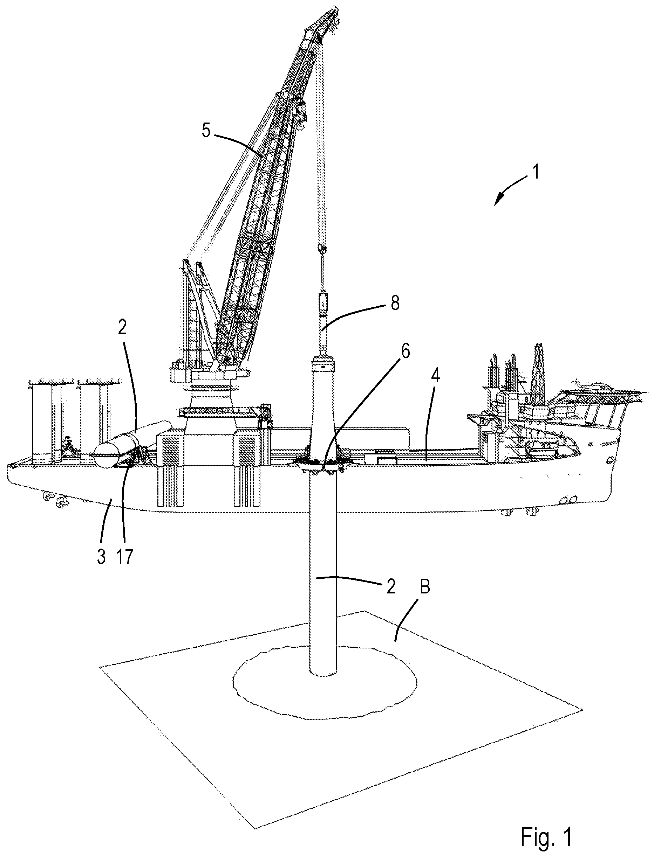

Fig. 1 shows a floating installation vessel 1 for installing a monopile 2 in a seabed B. The installation vessel 1 has a hull 3 including an upper deck 4. A crane 5 for lifting the monopile 2 is mounted to the hull 3. The installation vessel 1 is also provided with a guide 6 for guiding the monopile 2 in its longitudinal direction during driving the monopile 2 into the seabed B.

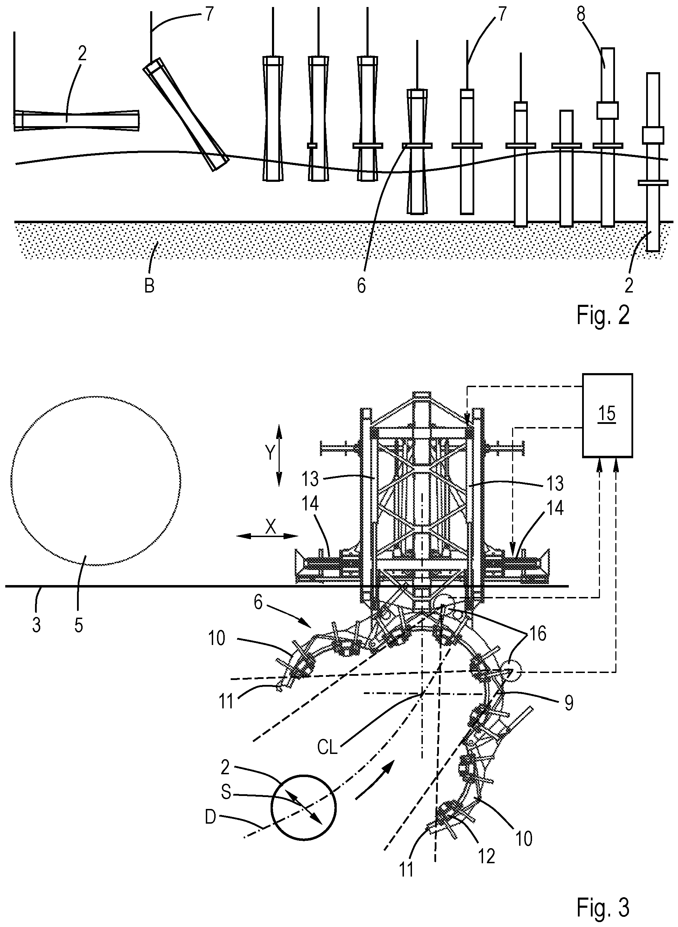

Under operating conditions, the monopiles 2 are transported horizontally by the installation vessel 1 from a production facility to an off-shore installation site. Fig. 2 illustrates a number of successive activities at the off-shore installation site. One of the monopiles 2 is up-ended by means of the crane 5, assisted with a hinge 17, as shown in Fig. 1, that supports the monopile 2 on the deck 4, after which the monopile 2 suspends vertically from a cable 7 of the crane 3. Subsequently, the monopile 2 is received by the guide 6 and placed onto the seabed B, after which the cable 7 is separated from the monopile 2. Then, a pile driving device 8 is placed on top of the monopile 2 by the crane 5 in order to drive the monopile 2 into the seabed B. Alternatively, a split block crane is present, wherein an upper end and lower end of the monopile 2 can be lifted separately such that the crane can perform upending on its own without the hinge 17.

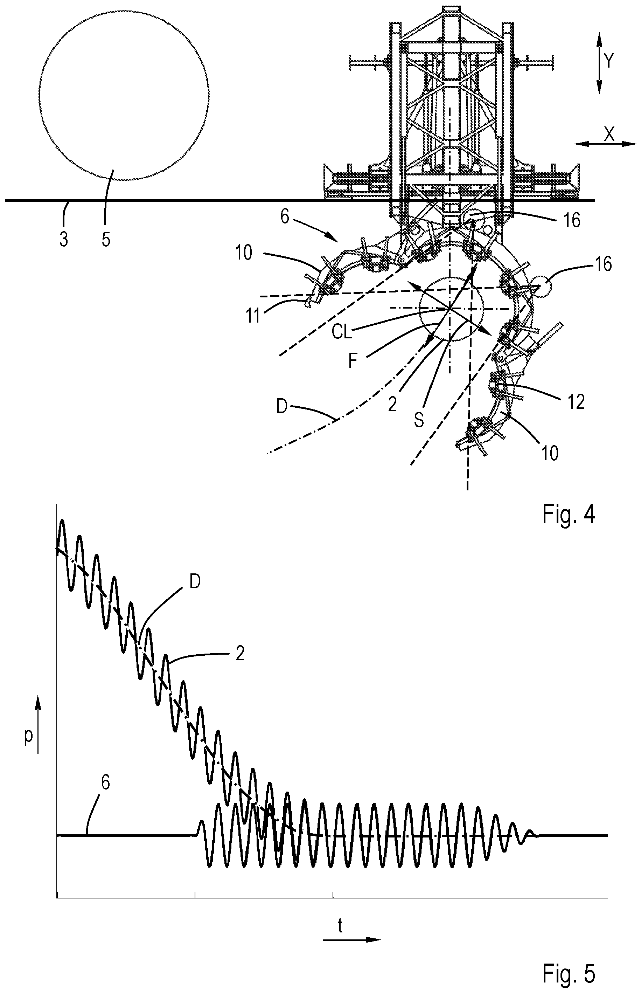

The guide 6 has an open condition and a closed condition. The open condition is shown in Figs. 3 and 4. In the closed condition the guide 6 forms an annular body for enveloping a monopile 2. The annular body extends in a main plane. In this case the annular body is substantially circular and has a centreline CL. The main plane is substantially parallel to the upper deck 4 of the installation vessel 1, which is horizontal in the event of a calm sea. The guide 6 is provided with a receiving part 9 and a closure part in the form of a pair of doors 10 which open in opposite directions with respect to each other in outward direction of the guide 6. In the open condition the guide 6 has an opening which enables a monopile 2 to be inserted into a space that is bordered by the receiving part 9. The receiving part 9 in the embodiment as shown in Figs. 3 and 4 is semi-circular. The doors 10 can be locked to each other through cooperating locking members 11. The guide 6 may have a different shape than shown in Figs. 3 and 4, whereas the doors 10 may be replaced by a single door, for example.

The guide 6 is provided with retractable pile supports or so-called bogeys 12, which are guide arms including rollers. The bogeys 12 are moved towards the centreline CL before pile driving starts, i.e. when the monopile 2 is located in the guide 6 and the guide 6 is in its closed condition. In the open condition of the guide 6 the bogeys 12 are retracted in order to allow the monopile 2 to enter the space which is bordered by the receiving part 9 and to minimize the risk of collisions between the bogeys 12 and the monopile 2. In this case the bogeys 12 lie on an imaginary circle when the guide 6 is in the closed condition and the bogeys 12 are retracted.

The installation vessel 1 comprises a displacing device in the form of a pair of first hydraulic cylinders 13 and a pair of second hydraulic cylinders 14. The first hydraulic cylinders 13 operate along a first line of action Y and the second hydraulic cylinders 14 operate along a second line of action X which is perpendicular to the first line of action Y. The first and second lines of action X, Y extend parallel to the main plane. Consequently, the guide 6 is movable with respect to the upper deck 4 within the main plane. Alternatively, the first and second hydraulic cylinders 13, 14 may be replaced by other linear actuators such as a rack and pinion system, a winch or the like.

Figs. 3 and 4 illustrate a desired path D which is followed by an axial centreline of the monopile 2 at the level of the main plane towards the centreline CL of the guide 6. The partly circular path D or slewing trajectory is caused by the rotating motion of the crane 5. Such a circular path D may be followed in case of a very calm sea. However, since the monopile 2 is installed from the floating installation vessel 1, the monopile 2 will oscillate due to motion of the installation vessel 1 and due to waves when a lower portion of the monopile 2 is located in the sea, in practice. This is illustrated in Fig. 2. Usually, the monopile 2 oscillates about its centre of gravity which lies at a distance of, and often above, the main plane of the guide 6.

In order to prevent the guide 6 and the monopile 2 from collisions during inserting the monopile 2 into the space that is bordered by the receiving part 9 the installation vessel 1 is provided with a control system 15 for controlling the first and second hydraulic cylinders 13, 14 such that the guide 6 moves substantially synchronously with an oscillating path of the approaching monopile 2. For this reason the installation vessel 1 comprises position sensors 16 at the receiving part 9, see Fig. 3. In this case, each of the position sensors 16 covers a detection range of which the borders are indicated by broken lines in Fig. 3. Signals from the position sensors 16 are received by the control system 15. On the basis of these signals the control system 15 determines the actual oscillating path of the monopile 2 with respect to the guide 6 in the main plane when the monopile 2 is being moved towards the guide 6. The control system 15 controls the hydraulic cylinders 13, 14 such that the guide 6 is displaced substantially synchronously with the determined oscillating path of the monopile 2 in the same direction thereof. In other words the guide 6 follows the oscillating motion of the monopile 2. The position sensors 16 and the control system 15 may be configured such that a centreline of the monopile 2 is determined. This provides the opportunity to use the centreline of the monopile 2 as a reference which should be followed by the centreline CL of the guide 6.

In the embodiment as shown in the figures, the control system 15 decomposes the determined oscillating path in a first component F which is directed towards the guide 6 and away from the guide 6 and a second component S which extends perpendicularly to the first component F, see Fig. 4. When the determined oscillating path is located close to the receiving part 9 of the guide 2, i.e. at a first distance from the receiving part 9, the control system 15 controls the hydraulic cylinders 13, 14 such that the guide 6 is displaced along both the first component F and the second component S. When the determined oscillating path is located at a greater distance from the receiving part 9, i.e. at a second distance from the receiving part 9 which is larger than the first distance, the guide 6 is displaced along the second component S only. The latter situation is illustrated in Fig. 3. The reason for this control strategy is that when the monopile 2 is approaching the guide 6 the risk of a collision between the receiving part 9 and the monopile 2 along the second component S is higher than along the first component F, whereas when the monopile 2 is close to the receiving part 9 the risk of a collision in both directions increases. Hence, the monopile 2 passes the opening of the guide 6 at maximum clearance at opposite sides thereof.

The guide 6 and/or the first and second hydraulic cylinders 13, 14 may be provided with a damping device for mitigating collisions between the monopile 2 and the guide 6. For example, the bogeys 12 may comprise damping elements (not shown).

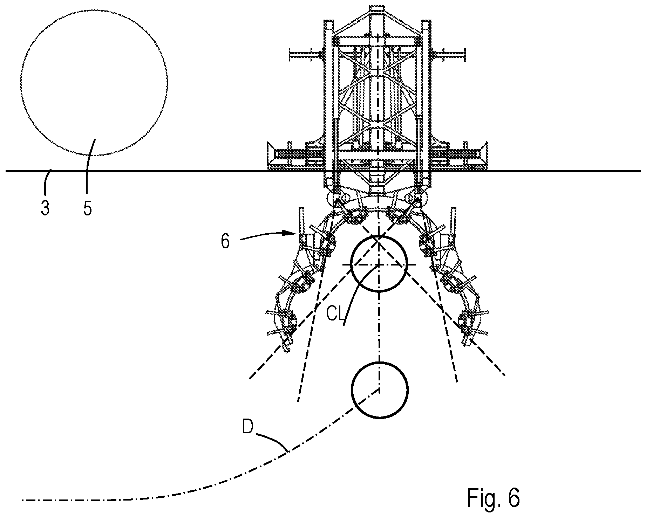

The actions of the control system 15 are visualized in Fig. 5. This figure shows the actual positions P of the centreline CL of the guide 6 and the centreline of a monopile 2 as a function of time t. The centreline of the monopile 2 oscillates about a curve which represents the average movement of the centreline of the monopile 2 towards the guide 6. The curve is given reference sign D in order to indicate that it represents the path D as shown in Figs. 3 and 4. At the left part of Fig. 6 it can be seen that the oscillating monopile 2 approaches the guide 6, whereas the guide 6 is still not displaced by the control system 15. At a certain moment the distance between the monopile 2 and the guide 2 becomes smaller than a predetermined value. The motion compensation can be started as soon as the monopile 2 arrives in the range of the position sensors 16. Subsequently, the guide 6 starts to follow the oscillating path of the monopile 2 within the main plane. As a consequence the monopile 2 can safely move further inside the space that is bordered by the receiving part 9 and finally, as soon as the centreline of the monopile 2 substantially coincides with the centreline CL of the guide 6 the doors 10 are closed and the bogeys 12 are extended. Then, the control system 15 may control the hydraulic cylinders 13, 14 such that the guide 6 counteracts the oscillating motion of the monopile 2 in order to stabilize the monopile 2 with respect to the hull 3. After stabilizing the monopile 2 with respect to the hull 3 the monopile 2 needs to be actively positioned with respect to the sea bottom B as it needs to be stabbed at the right target location. After that, the hoisting cable 7 may be decoupled from the monopile 2 and a pile driving device 8 can be placed on top of the monopile 2 in order to drive the monopile 2 into the seabed B.

Fig. 6 shows that the guide 6 is rotatable with respect to the hull 3 about an axis that extends perpendicular to the main plane of the guide 6. Consequently, the opening can be directed in a different direction in the open condition of the guide 6. In the situation as shown in Fig. 6 the opening is directed in a direction perpendicularly with respect to a longitudinal axis of the hull 3. Hence, the centreline CL of the guide is not located at an end of the partly circular path D of the monopile 2 towards the guide 6 such as in the conditions as shown in Fig. 3 and 4.

The invention is not limited to the embodiment shown in the drawings and described hereinbefore. The invention is defined by the appended claims.

## Claims

1. A vessel (1), comprising a hull (3) and a guide (6) for guiding a monopile (2) to be driven into a seabed (B), which guide (6) is movably mounted to the hull (3) and provided with a receiving part (9) and a closure part (10) which is movable with respect to the receiving part (9) for creating a closed condition of the guide (6) in which closed condition the guide (6) forms an annular body extending in a main plane and an open condition in which the guide (6) has an opening to a space which is bordered by the receiving part (9), allowing a monopile (2) to be received in the space via the opening, a displacing device (13, 14) for displacing the guide (6) within the main plane with respect to the hull (3) and a control system (15) for controlling the displacing device (13, 14), **characterised in that** the control system (15) is configured such that it determines an oscillating path of a monopile (2) with respect to the hull (3) in a direction within the main plane when the monopile (2) and the guide (6) are moving towards each other and the guide (6) is in the open condition for receiving the monopile (2) and such that the displacing device (13, 14) displaces the guide (6) substantially synchronously with the determined oscillating path in the same direction thereof.

2. A vessel (1) according to claim 1, wherein the control system (15) is configured such that it decomposes the direction in a first component (F) which is towards the guide (6) and away from the guide (6) and a second component (S) which extends transversely to the first component (F), wherein when the determined oscillating path is located at a first distance from the receiving part (9) the displacing device (13, 14) displaces the guide (6) along the first and second components (F, S), whereas when the determined oscillating path is located at a second distance from the receiving part (9) which is larger than the first distance the displacing device (13, 14) displaces the guide (6) along the second component (S) only.

3. A vessel (1) according to claim 1 or 2, wherein in the closed condition the guide (6) is substantially circular within the main plane such that the receiving part (9) is partly circular within the main plane.

4. A vessel (1) according to any one of the preceding claims, wherein the closure part comprises a pair of doors (10) which are pivotally mounted to the receiving part (9) and open in opposite directions with respect to each other in outward direction of the guide (6), preferably independently from each other.

5. A vessel (1) according to any one of the preceding claims, wherein the displacing device is provided with linear actuators, such as hydraulic cylinders (13, 14) or a rack and pinion system, which operate along lines of action that extend perpendicularly to each other.

6. A vessel (1) according to any one of the preceding claims, wherein the control system (15) comprises a position sensor (12) for determining the actual location of a monopile (2) with respect to the guide (6) so as to determine the oscillating path.

7. A vessel (1) according to claim 6, wherein the position sensor (12) is located at the guide (6).

8. A vessel (1) according to claim 7, wherein the position sensor (12) is located at the receiving part (9).

9. A vessel (1) according any one of the preceding claims, wherein the vessel (1) is provided with a crane (5) for hoisting a monopile (2) and moving the hoisted monopile (2) towards the guide (6).

10. A vessel (1) according to any one of the preceding claims and claim 6, wherein the control system (15) comprises an inclination angle sensor for determining an actual inclination angle of the monopile (2).

11. A vessel (1) according to any one of the preceding claims, wherein the guide (6) and/or the displacing device (13, 14) is provided with a damping device for mitigating collisions between a monopile (2) and the guide (6).

12. A vessel (1) according to claim 11, wherein the damping device comprises damping elements at an inner circumference of the guide (6).

13. A vessel (1) according to any one of the preceding claims, wherein the guide (6) is rotatable with respect to the hull (3) about an axis which extends perpendicularly to the main plane.

14. A method of inserting a monopile (2) to be driven into a seabed (B) into a guide (6) for guiding the monopile (2), which guide (6) is movably mounted to a hull (3) of a vessel (1) and provided with a receiving part (9) and a closure part (10) which is movable with respect to the receiving part (9) for creating a closed condition of the guide (6) in which closed condition the guide (6) forms an annular body extending in a main plane and an open condition in which the guide (6) has an opening to a space which is bordered by the receiving part (9), allowing a monopile (2) to be received in the space via the opening, wherein in the open condition the monopile (2) and the guide (6) are moved to each other, during which movement an oscillating path of the monopile (2) with respect to the hull (3) within the main plane is determined and the guide (6) is displaced substantially synchronously with the determined oscillating path in the same direction thereof.

15. A method according to claim 14, wherein the direction is decomposed in a first component (F) which is towards the guide (6) and away from the guide (6) and a second component (S) which extends transversely to the first component (F), wherein when the determined oscillating path is located at a first distance from the receiving part (9) the guide (6) is displaced along the first and second components (F, S), whereas when the determined oscillating path is located at a second distance from the receiving part (9) which is larger than the first distance the guide (6) is displaced along the second component (S) only.

16. A method according to claim 14 or 15, wherein after inserting the monopile (2) into the guide the closure part (10) is closed, during which and/or after which the guide (6) is displaced such that a counterforce is applied on the monopile (2) in order to minimize the amplitude of the oscillating path.

17. A method according to claim 14 or 15, wherein after inserting the monopile (2) into the guide the closure part (10) is closed, during which and/or after which a remaining oscillating motion of the guide (6) including the monopile (2) is dampened.

## Patentansprüche

1. Schiff (1), aufweisend einen Rumpf (3) und eine Führung (6) zum Führen eines Monopiles (2), der in einen Meeresboden (B) gerammt werden soll, wobei die Führung (6) bewegbar an dem Rumpf (3) angebracht ist und mit einem Aufnahmeabschnitt (9) und einem Verschlussabschnitt (10) versehen ist, der in Bezug auf den Aufnahmeabschnitt (9) bewegbar ist zum Erzeugen eines geschlossen-Zustands der Führung (6), in welchem geschlossen-Zustand die Führung (6) einen ringförmigen Körper bildet, der sich in einer Hauptebene erstreckt, und eines offen-Zustands, in welchem die Führung (6) eine Öffnung zu einem Raum hat, der von dem Aufnahmeabschnitt (9) begrenzt ist, wodurch es einem Monopile (2) ermöglicht ist, via die Öffnung in dem Raum aufgenommen zu werden, eine Verlagerungsvorrichtung (13, 14) zum Verlagern der Führung (6) innerhalb der Hauptebene in Bezug auf den Rumpf (3) und ein Steuersystem (15) zum Steuern der Verlagerungsvorrichtung (13, 14), **dadurch gekennzeichnet, dass** das Steuersystem (15) konfiguriert ist derart, dass es einen Oszillationsweg eines Monopiles (2) in Bezug auf den Rumpf (3) in einer Richtung innerhalb der Hauptebene ermittelt, wenn sich der Monopile (2) und die Führung (6) aufeinander zu bewegen und die Führung (6) in dem offen-Zustand zum Aufnehmen des Monopiles (2) ist, und derart, dass die Verlagerungsvorrichtung (13, 14) die Führung (6) im Wesentlichen synchron mit dem ermittelten Oszillationsweg in dessen gleiche Richtung verlagert.

2. Schiff (1) gemäß Anspruch 1, wobei das Steuersystem (15) konfiguriert ist derart, dass es die Richtung in eine erste Komponente (F), die zu der Führung (6) hin und von der Führung (6) weg verläuft, und eine zweite Komponente (S), die sich quer zur ersten Komponente (F) erstreckt, zerlegt, wobei, wenn der ermittelte Oszillationsweg in einem ersten Abstand vom Aufnahmeabschnitt (9) angeordnet ist, die Verlagerungsvorrichtung (13, 14) die Führung (6) entlang der ersten und der zweiten Komponente (F, S) verlagert, wohingegen wenn der ermittelte Oszillationsweg in einem zweiten Abstand von dem Aufnahmeabschnitt (9) angeordnet ist, der größer als der erste Abstand ist, die Verlagerungsvorrichtung (13, 14) die Führung (6) nur entlang der zweiten Komponente (S) verlagert.

3. Schiff (1) gemäß Anspruch 1 oder 2, wobei die Führung (6) im geschlossen-Zustand innerhalb der Hauptebene im Wesentlichen kreisförmig ist, so dass der Aufnahmeabschnitt (9) innerhalb der Hauptebene teilweise kreisförmig ist.

4. Schiff (1) gemäß irgendeinem der vorstehenden Ansprüche, wobei der Verschlussabschnitt ein Paar Türen (10) aufweist, die schwenkbar an dem Aufnahmeabschnitt (9) angebracht sind und in entgegengesetzten Richtungen in Bezug zueinander in Richtung nach außen von der Führung (6) öffnen, vorzugsweise unabhängig voneinander.

5. Schiff (1) gemäß irgendeinem der vorhergehenden Ansprüche, wobei die Verlagerungsvorrichtung mit Linearaktuatoren, wie Hydraulikzylindern (13, 14) oder einem Zahnstangen-Zahnrad-System, versehen ist, die entlang von Wirklinien arbeiten, die sich senkrecht zueinander erstrecken.

6. Schiff (1) gemäß irgendeinem der vorstehenden Ansprüche, wobei das Steuersystem (15) einen Positionssensor (12) zum Ermitteln der aktuellen Position eines Monopiles (2) in Bezug auf die Führung (6) aufweist, um den Oszillationsweg zu ermitteln.

7. Schiff (1) gemäß Anspruch 6, wobei der Positionssensor (12) an der Führung (6) angeordnet ist.

8. Schiff (1) gemäß Anspruch 7, wobei der Positionssensor (12) am Aufnahmeabschnitt (9) angeordnet ist.

9. Schiff (1) gemäß irgendeinem der vorhergehenden Ansprüche, wobei das Schiff (1) mit einem Kran (5) zum Heben eines Monopiles (2) und Bewegen des angehobenen Monopiles (2) hin zu der Führung (6) versehen ist.

10. Schiff (1) gemäß irgendeinem der vorhergehenden Ansprüche und Anspruch 6, wobei das Steuersystem (15) einen Neigungswinkelsensor zum Ermitteln eines aktuellen Neigungswinkels des Monopiles (2) aufweist.

11. Schiff (1) gemäß irgendeinem der vorhergehenden Ansprüche, wobei die Führung (6) und/oder die Verlagerungsvorrichtung (13, 14) mit einer Dämpfungsvorrichtung zum Abmildern von Kollisionen zwischen einem Monopile (2) und der Führung (6) versehen ist.

12. Schiff (1) gemäß Anspruch 11, wobei die Dämpfungsvorrichtung Dämpfungselemente an einem Innenumfang der Führung (6) aufweist.

13. Schiff (1) gemäß irgendeinem der vorhergehenden Ansprüche, wobei die Führung (6) in Bezug auf den Rumpf (3) um eine Achse drehbar ist, die sich senkrecht zur Hauptebene erstreckt.

14. Verfahren zum Einsetzen eines Monopiles (2), der in einen Meeresboden (B) gerammt werden soll, in eine Führung (6) zum Führen des Monopiles (2), welche Führung (6) bewegbar an einem Rumpf (3) eines Schiffes (1) angebracht ist und mit einem Aufnahmeabschnitt (9) und einem Verschlussabschnitt (10) versehen ist, der in Bezug auf den Aufnahmeabschnitt (9) bewegbar ist zum Erzeugen eines geschlossen-Zustands der Führung (6), in welchem geschlossen-Zustand die Führung (6) einen ringförmigen Körper bildet, der sich in einer Hauptebene erstreckt, und eines offen-Zustands, in welchem die Führung (6) eine Öffnung zu einem Raum hat, der durch den Aufnahmeabschnitt (9) begrenzt ist, wodurch es einem Monopile (2) ermöglicht ist, via die Öffnung in dem Raum aufgenommen zu werden, wobei in dem offen-Zustand der Monopile (2) und die Führung (6) aufeinander zu bewegt werden, während welcher Bewegung ein Oszillationsweg des Monopiles (2) in Bezug auf den Rumpf (3) innerhalb der Hauptebene ermittelt wird und die Führung (6) im Wesentlichen synchron mit dem ermittelten Oszillationsweg in dessen gleiche Richtung verlagert wird.

15. Verfahren gemäß Anspruch 14, wobei die Richtung in eine erste Komponente (F), die zu der Führung (6) hin und von der Führung (6) weg verläuft, und eine zweite Komponente (S), die sich quer zur ersten Komponente (F) erstreckt, zerlegt wird, wobei, wenn der ermittelte Oszillationsweg in einem ersten Abstand vom Aufnahmeabschnitt (9) angeordnet ist, die Führung (6) entlang der ersten und der zweiten Komponente (F, S) verlagert wird, wohingegen wenn der ermittelte Oszillationsweg in einem zweiten Abstand von dem Aufnahmeabschnitt (9) angeordnet ist, der größer als der erste Abstand ist, die Führung (6) nur entlang der zweiten Komponente (S) verlagert wird.

16. Verfahren gemäß Anspruch 14 oder 15, wobei nach dem Einsetzen des Monopiles (2) in die Führung der Verschlussabschnitt (10) geschlossen wird, währenddessen und/oder wonach die Führung (6) so verlagert wird, dass eine Gegenkraft auf den Monopile (2) ausgeübt wird, um die Amplitude des Oszillationswegs zu minimieren.

17. Verfahren gemäß Anspruch 14 oder 15, wobei nach dem Einsetzen des Monopiles (2) in die Führung der Verschlussabschnitt (10) geschlossen wird, wobei währenddessen und/oder wonach eine verbleibende Oszillationsbewegung der Führung (6) einschließlich des Monopiles (2) gedämpft wird.

## Revendications

1. Navire (1), comprenant une coque (3) et un guide (6) pour guider un monopieu (2) devant être enfoncé dans un fond marin (B), lequel guide (6) est monté de manière mobile sur la coque (3) et doté d'une partie de réception (9) et d'une partie de fermeture (10) qui est mobile par rapport à la partie de réception (9) pour créer un état fermé du guide (6) dans lequel état fermé le guide (6) forme un corps annulaire s'étendant dans un plan principal et un état ouvert dans lequel le guide (6) a une ouverture sur un espace qui est bordé par la partie de réception (9), permettant à un monopieu (2) d'être reçu dans l'espace via l'ouverture, un dispositif de déplacement (13, 14) pour déplacer le guide (6) dans le plan principal par rapport à la coque (3) et un système de commande (15) pour commander le dispositif de déplacement (13, 14), **caractérisé en ce que** le système de commande (15) est configuré de telle sorte qu'il détermine une trajectoire oscillante d'un monopieu (2) par rapport à la coque (3) dans une direction dans le plan principal lorsque le monopieu (2) et le guide (6) se déplacent l'un vers l'autre et le guide (6) est dans l'état ouvert pour recevoir le monopieu (2) et de telle sorte que le dispositif de déplacement (13, 14) déplace le guide (6) sensiblement de manière synchrone avec la trajectoire oscillante déterminée dans la même direction de celle-ci.

2. Navire (1) selon la revendication 1, dans lequel le système de commande (15) est configuré de telle sorte qu'il décompose la direction en une première composante (F) qui est vers le guide (6) et loin du guide (6) et une seconde composante (S) qui s'étend transversalement par rapport à la première composante (F), dans lequel lorsque la trajectoire oscillante déterminée est située à une première distance de la partie de réception (9), le dispositif de déplacement (13, 14) déplace le guide (6) le long des première et seconde composantes (F, S), tandis que lorsque la trajectoire oscillante déterminée est située à une seconde distance de la partie de réception (9) qui est supérieure à la première distance, le dispositif de déplacement (13, 14) ne déplace le guide (6) que le long de la seconde composante (S).

3. Navire (1) selon la revendication 1 ou 2, dans lequel, dans l'état fermé, le guide (6) est sensiblement circulaire dans le plan principal de telle sorte que la partie de réception (9) soit partiellement circulaire dans le plan principal.

4. Navire (1) selon l'une quelconque des revendications précédentes, dans lequel la partie de fermeture comprend une paire de portes (10) qui sont montées de manière pivotante sur la partie de réception (9) et s'ouvrent dans des directions opposées l'une par rapport à l'autre dans une direction vers l'extérieur du guide (6), de préférence indépendamment l'une de l'autre.

5. Navire (1) selon l'une quelconque des revendications précédentes, dans lequel le dispositif de déplacement est doté d'actionneurs linéaires, tels que des vérins hydrauliques (13, 14) ou un système de crémaillère et de pignon, qui fonctionnent le long de lignes d'action qui s'étendent perpendiculairement l'une à l'autre.

6. Navire (1) selon l'une quelconque des revendications précédentes, dans lequel le système de commande (15) comprend un capteur de position (12) pour déterminer l'emplacement réel d'un monopieu (2) par rapport au guide (6) de manière à déterminer la trajectoire oscillante.

7. Navire (1) selon la revendication 6, dans lequel le capteur de position (12) est situé au niveau du guide (6).

8. Navire (1) selon la revendication 7, dans lequel le capteur de position (12) est situé au niveau de la partie de réception (9).

9. Navire (1) selon l'une quelconque des revendications précédentes, dans lequel le navire (1) est doté d'une grue (5) pour lever un monopieu (2) et déplacer le monopieu (2) levé vers le guide (6).

10. Navire (1) selon l'une quelconque des revendications précédentes et la revendication 6, dans lequel le système de commande (15) comprend un capteur d'angle d'inclinaison pour déterminer un angle d'inclinaison réel du monopieu (2).

11. Navire (1) selon l'une quelconque des revendications précédentes, dans lequel le guide (6) et/ou le dispositif de déplacement (13, 14) sont dotés d'un dispositif d'amortissement pour atténuer les collisions entre un monopieu (2) et le guide (6).

12. Navire (1) selon la revendication 11, dans lequel le dispositif d'amortissement comprend des éléments d'amortissement au niveau d'une circonférence intérieure du guide (6).

13. Navire (1) selon l'une quelconque des revendications précédentes, dans lequel le guide (6) est rotatif par rapport à la coque (3) autour d'un axe qui s'étend perpendiculairement au plan principal.

14. Procédé d'insertion d'un monopieu (2) devant être enfoncé dans un fond marin (B) dans un guide (6) pour guider le monopieu (2), lequel guide (6) est monté de manière mobile sur une coque (3) d'un navire (1) et doté d'une partie de réception (9) et d'une partie de fermeture (10) qui est mobile par rapport à la partie de réception (9) pour créer un état fermé du guide (6), dans lequel état fermé le guide (6) forme un corps annulaire s'étendant dans un plan principal et un état ouvert dans lequel le guide (6) a une ouverture sur un espace qui est bordé par la partie de réception (9), permettant à un monopieu (2) d'être reçu dans l'espace via l'ouverture, dans lequel, dans l'état ouvert, le monopieu (2) et le guide (6) sont déplacés l'un vers l'autre, au cours duquel déplacement une trajectoire oscillante du monopieu (2) par rapport à la coque (3) dans le plan principal est déterminée et le guide (6) est déplacé sensiblement de manière synchrone avec la trajectoire oscillante déterminée dans la même direction de celle-ci.

15. Procédé selon la revendication 14, dans lequel la direction est décomposée en une première composante (F) qui est vers le guide (6) et loin du guide (6) et une seconde composante (S) qui s'étend transversalement par rapport à la première composante (F), dans lequel lorsque la trajectoire oscillante déterminée est située à une première distance de la partie de réception (9), le guide (6) est déplacé le long des première et seconde composantes (F, S), tandis que lorsque la trajectoire oscillante déterminée est située à une seconde distance de la partie de réception (9) qui est supérieure à la première distance, le guide (6) n'est déplacé que le long de la seconde composante (S).

16. Procédé selon la revendication 14 ou 15, dans lequel après l'insertion du monopieu (2) dans le guide, la partie de fermeture (10) est fermée, pendant ce temps et/ou après cela le guide (6) est déplacé de telle sorte qu'une contre-force soit appliquée sur le monopieu (2) afin de réduire au maximum l'amplitude de la trajectoire oscillante.

17. Procédé selon la revendication 14 ou 15, dans lequel après l'insertion du monopieu (2) dans le guide, la partie de fermeture (10) est fermée, pendant ce temps et/ou après cela un déplacement oscillant restant du guide (6) comprenant le monopieu (2) est amorti.
